# FASCICULE DE BREVET EUROPEEN

(11) **EP 2 821 326 B1**
(45) Date de publication et mention de la délivrance du brevet: **09.08.2017**
(21) Numéro de dépôt: 14306045.7
(22) Date de dépôt: 30.06.2014
(51) Int. Cl.: B62D 25/07, B60R 16/027

(54) **Elément de carosserie d'un vehicule automobile**
Karosserieelement eines Kraftfahrzeugs
Body element of a motor vehicle

(30) Priorité: 05.07.2013 FR 1356663
(43) Date de publication de la demande: 07.01.2015
(73) Titulaire: Renault S.A.S., 92100 Boulogne-Billancourt (FR)
(72) Inventeur: Froment, Sebastien, 91160 LONGJUMEAU (FR)

(56) Documents cités:
- WO-A1-2013/080003
- JP-A- H09 142 230
- JP-A- 2005 001 627
- US-A- 6 000 747

## Description

### Domaine de l'invention :

La présente invention concerne un élément de carrosserie d'un véhicule automobile et se rapporte plus particulièrement à un élément de carrosserie comprenant deux parois principales s'étendant suivant une direction transversale du véhicule, ces parois formant entre elles un angle rentrant, typiquement un angle droit. Ce type d'agencement est prévu dans une partie arrière du véhicule, à l'arrière d'un élément de toit, dans une zone adjacente à un hayon de fermeture arrière du véhicule.

### Etat de la technique :

Dans la zone de cet angle rentrant, les parois principales sont constituées d'une paroi verticale et d'une paroi horizontale se recoupant entre elles. Il est nécessaire de faire passer un ou plusieurs câble(s) au travers de ces parois principales, par exemple pour commander les feux arrière, le troisième feu stop, l'éclairage de plaque de police, des éléments d'antenne, un tuyau de lave-vitre, etc. cette liste n'étant pas exhaustive. Or pour des raisons de style, de masse et d'aérodynamisme on cherche à limiter les dimensions extérieures des parois principales. Il est connu du document US6000747 un élément de carrosserie d'un véhicule automobile selon le préambule de la revendication 1.

Les parois principales n'offre pas une surface suffisante pour installer une bague de câble permettant de faire cheminer un câble à cet endroit. Il peut alors être nécessaire de déplacer latéralement le passage des câbles ce qui n'optimise pas les cheminements et les longueurs de câbles.

### But de l'invention :

L'invention a pour but de pallier tout ou partie des inconvénients précédents en proposant un élément de carrosserie qui tient compte des contraintes précédentes et permet un cheminement optimal du câble.

### Objet de l'invention :

A cet effet, l'invention a pour objet un élément de carrosserie d'un véhicule automobile comprenant deux parois principales s'étendant suivant une direction transversale du véhicule et formant entre elles un angle compris entre 60 et 120°, notamment un angle sensiblement droit, considéré suivant une vue parallèle à cette direction, caractérisé en ce qu'il comprend au moins une conformation disposée en contrefort entre les deux parois principales et pourvue d'une paroi secondaire en pente formant avec chacune des parois principales un angle compris entre 5° et 60°, cette paroi secondaire recevant une bague de câblage permettant à un câble de traverser la paroi secondaire. Ainsi la conformation en contrefort offre une surface et un volume permettant de recevoir aisément une bague de câble, dans une zone offrant peu de place.

Selon d'autres caractéristiques avantageuses de l'invention :
- la conformation en contrefort a une épaisseur considérée suivant la direction transversale qui est au moins égale à 60 mm,
- la conformation en contrefort s'étend sensiblement sur toute la longueur des parois principales, considérée suivant la direction transversale,
- la dimension extérieure de la paroi secondaire mesurée suivant la direction de la pente est d'au moins 30 mm, et en particulier d'au moins 40 mm,
- les parois principales comprennent une paroi avant sensiblement verticale et une paroi arrière sensiblement horizontale se rejoignant sensiblement à angle droit, la paroi avant ayant un bord supérieur auquel est raccordé un rebord inférieur d'un élément de toit du véhicule, la paroi arrière comportant à distance de la paroi avant un rebord s'élevant verticalement, et les parois principales formant une gouttière d'évacuation d'eau s'étendant transversalement à l'arrière d'un élément de toit du véhicule, dans une zone adjacente à un hayon arrière du véhicule,
- le bord supérieur de la première paroi est à une hauteur maximale de 60 mm de la seconde paroi, considéré suivant la direction verticale,
- les parois principales et la paroi secondaire sont réalisées dans une même pièce venue d'emboutissage,

L'invention a également pour objet un véhicule automobile comprenant un élément de carrosserie ayant tout ou partie des caractéristiques précédentes.

### Exposé de l'invention :

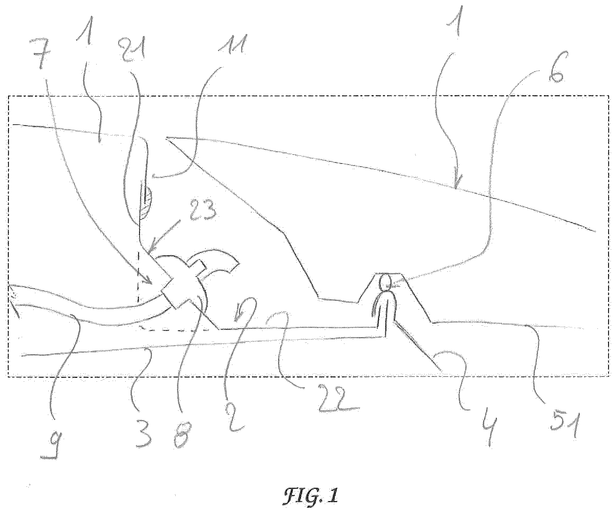

L'invention sera mieux comprise à la lecture de la description suivante d'un exemple non limitatif de l'invention, et à la lumière du dessin annexé (figure 1) qui représente une section suivant un plan vertical longitudinal d'une zone arrière du toit ou pavillon d'un véhicule automobile illustrant un élément de carrosserie selon l'invention.

Dans le présent texte, les directions et orientations sont indiquées en référence au repère classique d'un véhicule automobile, dans lequel X désigne la direction longitudinale avant-arrière du véhicule, dirigée vers l'arrière, Y la direction transversale du véhicule, dirigée vers la droite, et Z la direction verticale, dirigée vers le haut.

On a représenté à la figure 1 une section suivant un plan de coupe XZ d'une partie arrière du toit (pavillon) du véhicule automobile, dans une zone adjacente au bord supérieur du hayon arrière, représenté en position fermée. La section est ici située sur le plan vertical médian du véhicule (Y=0), étant entendu que l'invention s'applique de la même façon à d'autres positions transversales, c'est-à-dire que la section représentée à la figure 1 peut être décalée par rapport au plan vertical médian du véhicule.
Le toit 1 ou pavillon s'étend essentiellement suivant les directions longitudinale X et transversale Y. Dans sa partie arrière, le toit 1 soutient une gouttière 2 qui s'étend sensiblement suivant la direction transversale Y du véhicule. La gouttière 2 a la forme générale d'une cornière pourvue de deux parois principales 21, 22, dont une paroi avant 21 est disposée de façon sensiblement verticale, à l'avant de la gouttière 2, et une seconde arrière 22 est disposée de façon sensiblement horizontale, en partie basse de la gouttière 2. Dans l'ensemble du texte, le terme « sensiblement » signifie qu'une tolérance angulaire par rapport à une position nominale est admise et entre dans le cadre de l'invention, par exemple une tolérance de d'ordre de 10°.
La gouttière 2 est disposée au-dessus et à l'arrière d'un élément de carrosserie formant une doublure 3. La paroi arrière 22 est disposée à plat sur cette doublure 3. Des bords arrière de la paroi arrière 22 et de la doublure 3 comportent des rebords verticaux accolés l'un à l'autre, ces rebords formant conjointement une feuillure de tôlerie qui est sertie par une pièce arrière de carrosserie 4. Cette dernière comporte, dans la zone de la feuillure, un bord supérieur apte à coopérer par contact avec une forme correspondante d'une doublure intérieure 51 du hayon 5 en position fermée, ce contact étant réalisé via un joint d'étanchéité 6.
La paroi avant 21 comporte quant à elle un bord supérieur sur lequel est raccordé un rebord arrière 11 plié vers le bas du toit 1. La jonction entre le rebord arrière 11 et le bord supérieur de la paroi avant 21 comporte un mastic d'isolation et de calage. Les différentes pièces et éléments de carrosserie sont typiquement réalisés par emboutissage et assemblés par soudage.
Le bord supérieur de la paroi avant 21 est à une hauteur maximale de 60 mm de la paroi arrière 22, considéré suivant la direction verticale Z.
Cet agencement de l'élément de carrosserie s'étend sensiblement sur toute la largeur du véhicule ou tout au moins sur la majeure partie de celui-ci, et notamment dans la partie centrale (Y=0) au niveau du plan médian longitudinal vertical du véhicule.
Selon l'invention, l'élément de carrosserie comprend au moins une conformation 7 disposée en contrefort entre les deux parois principales 21, 22. Cette conformation en contrefort 7 est pourvue d'une paroi secondaire 23 en pente formant avec chacune des parois principales 21, 22 un angle compris entre 5° et 60°. Dans un mode de réalisation de l'invention, l'angle est typiquement de 7°.
La paroi secondaire 23 forme typiquement un angle sensiblement égal à 45° avec chacune des parois principales 21, 22.
La paroi secondaire 23 reçoit en outre une bague de câblage 8 permettant à un câble 9 de traverser la paroi secondaire 23. Ce câble 9 est par exemple destiné à La paroi secondaire 23 reçoit en outre une bague de câblage 8 permettant à un câble 9 de traverser la paroi secondaire 23. Ce câble 9 est par exemple destiné à commander les feux arrière, le troisième feu stop, l'éclairage de plaque de police, des éléments d'antenne, un tuyau de lave-vitre, etc. cette liste n'étant pas exhaustive.
La conformation 7 en contrefort a une épaisseur considérée suivant la direction transversale Y qui est au moins égale à 60 mm. Une conformation de 60 mm de largeur est un exemple approprié. Dans un autre mode de réalisation de l'invention, cette conformation en contrefort peut avoir une largeur mesurée suivant la direction Y qui est bien supérieure, et même s'étendre sensiblement sur toute la largeur du véhicule. Dans un autre mode de réalisation, plusieurs conformations d'une largeur chacune de 60 mm peuvent être réparties suivant la largeur du véhicule.
La dimension extérieure de la paroi secondaire 23 mesurée suivant la direction de la pente est d'au moins 30 mm, et en particulier d'au moins 40 mm. Un exemple de 40 mm est approprié. Ainsi la partie en pente de la paroi secondaire 23 offre une surface suffisante pour accueillir une bague de câblage 8. Cet agencement est d'autant utile que la paroi avant 21 ne permet pas en elle seule d'accueillir une bague de câble, cette paroi avant 21 ayant une hauteur insuffisante entre le rebord arrière replié du toit 1 et la paroi arrière 23. La conformation en contrefort 7 offre ainsi non seulement une surface d'appui pour recevoir une bague de câblage 8 mais également un volume permettant de loger une partie de la bague 8 et du câble 9 traversant la paroi secondaire 23.
La conformation 7 en contrefort est réalisée dans la même pièce que l'élément de carrosserie en forme de cornière comportant les parois principales. Les parois principales 21, 22 et la paroi secondaire 23 sont réalisées dans une même pièce venue d'emboutissage.

## Revendications

1. Elément de carrosserie d'un véhicule automobile comprenant deux parois principales (21 ; 22) s'étendant suivant une direction transversale (Y) du véhicule et formant entre elles un angle compris entre 60 et 120°, notamment un angle sensiblement droit, considéré suivant une vue parallèle à cette direction, au moins une conformation (7) disposée en contrefort entre les deux parois principales (21 ; 22) et pourvue d'une paroi secondaire (23) en pente formant avec chacune des parois principales (21 ; 22) un angle compris entre 5° et 60°, **caractérisé en ce que** la paroi secondaire (23) reçoit une bague de câblage (8) permettant à un câble (9) de traverser la paroi secondaire (23).

2. Elément de carrosserie selon la revendication 1, **caractérisé en ce que** la conformation en contrefort (7) a une épaisseur considérée suivant la direction transversale (Y) qui est au moins égale à 60 mm.

3. Elément de carrosserie selon la revendication 1 ou 2, **caractérisé en ce que** la conformation en contrefort (7) s'étend sensiblement sur toute la longueur des parois principales (21 ; 22), considérée suivant la direction transversale (Y).

4. Elément de carrosserie selon l'une quelconque des revendications 1 à 3, **caractérisé en ce que** la dimension extérieure de la paroi secondaire (23) mesurée suivant la direction de la pente est d'au moins 30 mm, et en particulier d'au moins 40 mm.

5. Elément de carrosserie selon l'une quelconque des revendications précédentes, **caractérisé en ce que** les parois principales (21 ; 22) comprennent une paroi avant (21) sensiblement verticale et une paroi arrière (22) sensiblement horizontale se rejoignant sensiblement à angle droit, la paroi avant (21) ayant un bord supérieur auquel est raccordé un rebord inférieur d'un élément de toit (1) du véhicule, la paroi arrière (22) comportant à distance de la paroi avant (21) un rebord s'élevant verticalement, et les parois principales (21 ; 22) formant une gouttière (2) d'évacuation d'eau s'étendant transversalement à l'arrière de l'élément de toit (1) du véhicule, dans une zone adjacente à un hayon (1) arrière du véhicule.

6. Elément de carrosserie suivant la revendication précédente, **caractérisé en ce que** le bord supérieur de la paroi avant (21) est à une hauteur maximale de 60 mm de la paroi arrière (22), considéré suivant la direction verticale (Z).

7. Elément de carrosserie suivant l'une quelconque des revendications précédentes, **caractérisé en ce que** les parois principales (21 ; 22) et la paroi secondaire (23) sont réalisées dans une même pièce venue d'emboutissage.

8. Véhicule automobile **caractérisé en ce qu'**il comprend un élément de carrosserie suivant l'une quelconque des revendications précédentes.

## Patentansprüche

1. Karosserieelement eines Kraftfahrzeugs, umfassend zwei Hauptwände (21; 22), die sich entlang einer Querrichtung (Y) des Fahrzeugs erstrecken und einen Winkel zwischen 60 und 120°, insbesondere einen im Wesentlichen rechten Winkel, parallel zu dieser Richtung betrachtet, zwischen sich bilden, und mindestens eine Ausbildung (7), die in Anlage zwischen den beiden Hauptwänden (21; 22) angeordnet ist und mit einer geneigten Nebenwand (23) versehen ist, die mit jeder der Hauptwände (21; 22) einen Winkel zwischen 5° und 60° bildet, **dadurch gekennzeichnet, dass** die Nebenwand (23) einen Verkabelungsring (8) aufnimmt, der das Hindurchführen eines Kabels (9) durch die Nebenwand (23) gestattet.

2. Karosserieelement nach Anspruch 1, **dadurch gekennzeichnet, dass** die Anlageausbildung (7), in Querrichtung (Y) gesehen, eine Dicke aufweist, die mindestens gleich 60 mm ist.

3. Karosserieelement nach Anspruch 1 oder 2, **dadurch gekennzeichnet, dass** sich die Anlageausbildung (7), in Querrichtung (Y) gesehen, im Wesentlichen über die gesamte Länge der Hauptwände (21; 22) erstreckt.

4. Karosserieelement nach einem der Ansprüche 1 bis 3, **dadurch gekennzeichnet, dass** die Außenabmessung der Nebenwand (23), gemessen in Richtung der Neigung, mindestens 30 mm und insbesondere mindestens 40 mm beträgt.

5. Karosserieelement nach einem der vorhergehenden Ansprüche, **dadurch gekennzeichnet, dass** die Hauptwände (21; 22) eine im Wesentlichen vertikale Vorderwand (21) und eine im Wesentlichen horizontale Rückwand (22) umfassen, die sich in einem im Wesentlichen rechten Winkel treffen, wobei die Vorderwand (21) einen oberen Rand aufweist, an dem eine untere Lippe eines Dachelements (1) des Fahrzeugs angebracht ist, wobei die Rückwand (22) in einem Abstand von der Vorderwand (21) eine Lippe aufweist, die vertikal erhaben ist, und die Hauptwände (21; 22) eine Rinne (2) zum Abführen von Wasser bilden, die sich in Querrichtung hinter dem Dachelement (1) des Fahrzeugs in einem Bereich neben einer Heckklappe (1) des Fahrzeug erstreckt.

6. Karosserieelement nach einem der vorhergehenden Ansprüche, **dadurch gekennzeichnet, dass** der obere Rand der Vorderwand (21), in Vertikalrichtung (Z) gesehen, eine maximale Höhe von 60 mm von der Rückwand (22) hat.

7. Karosserieelement nach einem der vorhergehenden Ansprüche, **dadurch gekennzeichnet, dass** die Hauptwände (21; 22) und die Nebenwand (23) aus dem gleichen Stanzteil hergestellt sind.

8. Kraftfahrzeug, **dadurch gekennzeichnet, dass** es ein Karosserieelement nach einem der vorhergehenden Ansprüche umfasst.

## Claims

1. Bodywork element of a motor vehicle, comprising two main walls (21; 22) that extend in a transverse direction (Y) of the vehicle and form an angle of between 60 and 120°, notably substantially a right angle, with one another as seen in a view parallel to this direction, and at least one shaped feature (7) that is disposed in abutment between the two main walls (21; 22) and is provided with a secondary sloped wall (23) that forms an angle of between 5° and 60° with each of the main walls (21; 22), **characterized in that** the secondary wall (23) holds a wiring ring (8) that allows a cable (9) to pass through the secondary wall (23).

2. Bodywork element according to Claim 1, **characterized in that** the abutting shaped feature (7) has a thickness at least equal to 60 mm as seen in the transverse direction (Y).

3. Bodywork element according to Claim 1 or 2, **characterized in that** the abutting shaped feature (7) extends substantially along the entire length of the main walls (21; 22) as seen in the transverse direction (Y).

4. Bodywork element according to any one of Claims 1 to 3, **characterized in that** the external dimension of the secondary wall (23), measured in the direction of the slope, is at least 30 mm, and in particular at least 40 mm.

5. Bodywork element according to any one of the preceding claims, **characterized in that** the main walls (21; 22) comprise a substantially vertical front wall (21) and a substantially horizontal rear wall (22) that meet substantially at right angles, the front wall (21) having an upper edge to which a lower lip of a roof element (1) of the vehicle is attached, the rear wall (22) comprising, at a distance from the front wall (21), a lip that rises vertically, and the main walls (21; 22) forming a gutter (2) for the evacuation of water that extends transversely behind the roof element (1) of the vehicle, in a region adjacent to a tailgate (1) of the vehicle.

6. Bodywork element according to the preceding claim, **characterized in that** the upper edge of the front wall (21) is at a maximum height of 60 mm from the rear wall (22) as seen in the vertical direction (Z).

7. Bodywork element according to any one of the preceding claims, **characterized in that** the main walls (21; 22) and the secondary wall (23) are made from one and the same stamped part.

8. Motor vehicle, **characterized in that** it comprises a bodywork element according to any one of the preceding claims.
